# EUROPEAN PATENT APPLICATION

(11) **EP 4 640 756 A2**
(43) Date of publication of application: **29.10.2025**
(21) Application number: 25167804.1
(22) Date of filing: 01.04.2025
(51) Int. Cl.: C08L 23/10

(54) **WOOD POWDER FIBER REINFORCED POLYOLEFIN-BASED RESIN COMPOSITION AND PRODUCTION METHOD THEREFOR**

(30) Priority: 02.04.2024 JP 2024059320
(71) Applicant: Toyoda Gosei Co., Ltd., Kiyosu-shi, Aichi 452-8564 (JP)
(72) Inventor: TANAKA, Yasuaki, Kiyosu-shi, 452-8564 (JP); UCHIDA, Hitoshi, Kiyosu-shi, 452-8564 (JP); YAMAZAKI, Yuma, Kiyosu-shi, 452-8564 (JP); MAEDA, Yoshihiro, Kariya-shi, 448-0002 (JP); NAYA, Aiko, Kariya-shi, 448-0002 (JP); ONO, Koutarou, Kariya-shi, 448-0002 (JP)
(74) Representative: Kramer Barske Schmidtchen Patentanwälte PartG mbB

(57) **Abstract**

A wood powder fiber reinforced polyolefin-based resin composition contains: a matrix polyolefin-based resin which is not a polyethylene; a wood powder fiber; an acid-modified polyethylene; and an olefin-based or styrene-based elastomer, wherein the wood powder fiber is embedded in contact with the acid-modified polyethylene, or contains 45 mass% to 65 mass% of a matrix polyolefin-based resin which is not a polyethylene; 5 mass% to 30 mass% of a wood powder fiber; an acid-modified polyethylene in an amount of 0.25 to 4.0 times the mass% of the wood powder fiber; and 10 mass% to 30 mass% of an olefin-based or styrene-based elastomer, wherein the acid-modified polyethylene is present in contact with a periphery of the wood powder fiber, and the elastomer is present in contact with a periphery of the acid-modified polyethylene or is present independently of the acid-modified polyethylene.

## Description

### TECHNICAL FIELD

The present invention relates to a wood powder fiber reinforced polyolefin-based resin composition and a production method therefor.

### BACKGROUND ART

Plant-derived fibers such as a wood powder fiber and a cellulose fiber are carbon-neutral and have been studied for use as a high strength reinforcing filler in a resin compound.

Patent Literature 1 discloses a method for producing a fiber reinforced resin composition, in which a step of kneading a cellulose-based fiber and a resin is performed by charging a molten resin into an upstream region and a downstream region of a single extruder, respectively, and the cellulose-based fiber is more appropriately defibrated while being kneaded with the resin.

Patent Literature 2 discloses a method for producing a plant fiber reinforced resin composition, in which a mixture containing a resin and a plant fiber is kneaded using a twin-screw extruder having a region where a region length, a screw diameter, and the number of kneading disks satisfy a specific formula, and mechanical properties are improved by using a method other than using additives.

Patent Literature 3 discloses an organic fiber reinforced resin composition containing first and second olefin-based resins having different melt mass flow rates and an organic fiber (preferably a plant fiber) at a predetermined mass ratio, which exhibits a ductile behavior under a tensile load and prevents breakage of a molded body.

Patent Literature 4 discloses a resin molded body containing a polyolefin resin and a natural fiber not subjected to a surface treatment, in which the fiber has a fiber diameter of 90 µm or less and a fiber distance of 200 µm or less, an interfacial adhesive force between the fiber and the resin is reduced to an extent that the fiber can be pulled out, providing excellent flexibility and a certain degree of strength.

Patent Literature 5 discloses a molded body containing a derivative fiber obtained by further chemically modifying a microfibrillated lignocellulose fiber that is obtained by defibrating a fiber containing a lignocellulose fiber to a nano-size level, and a matrix material such as a polymer, in which the fibers do not aggregate and the strength of the molded body is improved.

Patent Literature 6 discloses a fiber reinforced resin composition containing a chemically modified microfibrillated cellulose-based fiber, an inorganic filler such as a glass fiber and a carbon fiber, and a thermoplastic resin such as a polyamide and a polyolefin, in which the fiber has good dispersibility.

Patent Literature 7 discloses a fiber reinforced resin composition containing a chemically modified microfibrillated cellulose-based fiber, a plant fiber such as ramie and hemp, and a thermoplastic resin such as a polyamide and a polyolefin, in which the fiber has good dispersibility.

Patent Literature 8 discloses a polypropylene composition for producing a molded body containing a polypropylene, a rubber-containing polymer, and a compatibilizer made of an acid-modified or epoxy-modified olefin-based compound, and a cellulose fiber having an α-cellulose content of 80 mass% or more, an average fiber length of 1 µm to 100 µm, and an average fiber diameter of 1 µm to 50 µm, in which rigidity, elongation and colorability are good. The compatibilizer used in Examples is an acid-modified polypropylene.

Patent Literature 9 discloses a resin composition containing a hydrophobic polyolefin excluding a thermoplastic elastomer, a cellulose fiber having an average fiber length of 1 µm to 100 µm, a compatibilizer made of a maleic anhydride-modified polyolefin having a weight average molecular weight of 20,000 or less, and an elastomer, with which a molded product having both rigidity and impact resistance can be obtained. The compatibilizer used in Examples is an acid-modified polypropylene.

Patent Literature 10 discloses a cellulose composite resin containing a base resin, a cellulose fiber having an α-cellulose content of 50 mass% or more and less than 80 mass%, a dispersant made of a titanate-based coupling agent, a silane coupling agent, an unsaturated carboxylic acid, maleic acid, maleic anhydride, a modified polyolefin grafted with maleic anhydride, a fatty acid, or the like (= compatibilizer, Paragraph 0033), and a rubber-containing polymer, in which coloration is prevented and an increase in crystallinity of the resin is prevented. The compatibilizer used in Examples is an acid-modified polypropylene.

Patent Literature 11 discloses a cellulose fiber reinforced polyolefin-based resin composition containing a polyolefin-based resin, a cellulose fiber having a fiber length of 1 µm or more, a compatibilizer made of an acid-modified elastomer, and a high density polyethylene, in which the acid-modified elastomer is present in contact with a periphery of the cellulose fiber, and the high density polyethylene is present inside the acid-modified elastomer or in contact with a periphery of the acid-modified elastomer, improving both a bending elastic modulus and an impact strength.
Patent Literature 1: JP2022-6931A
Patent Literature 2: JP2021-59095A
Patent Literature 3: JP2019-151692A
Patent Literature 4: JP2011-213960A
Patent Literature 5: JP2016-169382A
Patent Literature 6: JP2019-6997A
Patent Literature 7: JP2020-75950A
Patent Literature 8: JP5666824B
Patent Literature 9: JP7213459B
Patent Literature 10: JP7349264B
Patent Literature 11: JP2022-156073A

### SUMMARY OF INVENTION

As in Patent Literatures 1 to 7, studies on a polyolefin-based resin containing a plant-derived fiber as a reinforcing filler are progressing, but although the elastic modulus and the strength can be easily improved by containing such a fiber, the impact strength is likely to decrease. The plant-derived fiber is a highly hydrophilic fiber that contains a hydroxy group, and has a weak interfacial interaction with a polyolefin, which is a highly hydrophobic resin, and it is though that during an impact, breakage occurs due to peeling at an interface between the plant-derived fiber and the polyolefin. As in Patent Literatures 5 to 7, even when the microfibrillated cellulose-based fiber is chemically modified, the dispersibility is improved, but the effect on impact resistance is small.

As in Patent Literatures 8 to 10, there are some examples in which the acid-modified polypropylene is used as a compatibilizer to improve the interfacial adhesion between the plant-derived fiber and the polyolefin-based resin, but the effect on impact resistance is small. The reason of this will be described in the [Function] section to be described later.

As in Patent Literature 11, when the acid-modified elastomer is used as a compatibilizer, the impact resistance is improved, but a fiber reinforcing effect decreases.

The decrease in impact strength is particularly problematic in the development of a composite material for automobile parts.

Therefore, an object of the present invention is to improve both an elastic modulus and an impact strength of a plant-derived fiber reinforced polyolefin-based resin composition.

The inventors of the present invention have found that when an acid-modified polyethylene is used as a compatibilizer and is made present in contact with a periphery of a wood powder fiber, both the bending elastic modulus and the impact strength are improved, and after further investigations, the present invention has been completed.
(1) A wood powder fiber reinforced polyolefin-based resin composition containing: a matrix polyolefin-based resin (excluding a polyethylene); a wood powder fiber; an acid-modified polyethylene; and an olefin-based or styrene-based elastomer, in which the wood powder fiber is embedded in contact with the acid-modified polyethylene.

### [Function]

As described above, when a plant-derived fiber is blended into the matrix resin as a reinforcing filler, the elastic modulus and the strength can be easily improved. However, during an impact, breakage occurs from interfacial peeling between the plant-derived fiber and the resin, which have a weak interfacial interaction, and therefore the impact strength is likely to decrease.

Here, as in Patent Literatures 8 to 10, there are some examples in which the acid-modified polypropylene is used as a compatibilizer to improve the interfacial adhesion between the plant-derived fiber and the matrix polypropylene, but the impact strength is not greatly improved. The inventors of the present invention have investigated the reason of this and thought that since no interface is formed between the acid-modified polypropylene and the matrix polypropylene, when an impact is applied, the interface between the plant-derived fiber and the acid-modified polypropylene breaks down, and the impact is absorbed at the interface.

In contrast, in the above configuration, when the acid-modified polyethylene is used as a compatibilizer, the wood powder fiber can be dispersed and distributed, the interfacial adhesion between the wood powder fiber and the matrix polyolefin-based resin can be improved, an interface can be formed between the acid-modified polyethylene and the matrix polyolefin-based resin (excluding a polyethylene), and this interface breaks when an impact is applied, thereby absorbing the impact and improving the impact resistance.

In addition, in the above configuration, since the acid-modified polyethylene is present in contact with the wood powder fiber and the olefin-based or styrene-based elastomer is not adjacent to the wood powder fiber, the impact can be absorbed at an interface between the elastomer and the matrix polyolefin-based resin, allowing the elastomer to exhibit inherent impact absorbing properties.

Therefore, as compared with the case where an acid-modified polypropylene or an acid-modified elastomer is used as a compatibilizer, the wood powder fiber reinforced polyolefin-based resin composition according to the present invention can achieve both a high elastic modulus and a high impact strength.
(2) A wood powder fiber reinforced polyolefin-based resin composition containing: 45 mass% to 65 mass% of a matrix polyolefin-based resin (excluding a polyethylene); 5 mass% to 30 mass% of a wood powder fiber; an acid-modified polyethylene, which is 0.25 to 4.0 times the mass% of the wood powder fiber; and 10 mass% to 30 mass% of an olefin-based or styrene-based elastomer, in which the acid-modified polyethylene is present in contact with a periphery of the wood powder fiber, and the elastomer is present in contact with a periphery of the acid-modified polyethylene or is present independently of the acid-modified polyethylene.
(3) The wood powder fiber reinforced polyolefin-based resin composition according to (1) or (2), further containing: 2 mass% to 15 mass% of a filler in addition to the wood powder fiber.
(4) The wood powder fiber reinforced polyolefin-based resin composition according to any one of (1) to (3), in which the polyolefin-based resin is a polypropylene, and the acid-modified polyethylene has an MFR (190°C, 21.2 N) of 5 g/10 min or less and a specific gravity of 0.93 or more.
(5) The wood powder fiber reinforced polyolefin-based resin composition according to any one of (1) to (4), in which the resin composition has a bending elastic modulus of 1700 MPa or more and a Charpy impact strength of 13 kJ/m² or more.
(6) The wood powder fiber reinforced polyolefin-based resin composition according to any one of (1) to (5), in which the resin composition has an MFR (230°C, 21.2 N) of 10 g/10 min or more.
(7) A wood powder fiber reinforced polyolefin-based resin composition containing: a wood powder fiber as a reinforcing filler in a matrix polyolefin-based resin, in which the wood powder fiber reinforced polyolefin-based resin composition has a bending elastic modulus of 1700 MPa or more, a Charpy impact strength of 13 kJ/m² or more, and an MFR (230°C, 21.2 N) of 10 g/10 min or more.
(8) A resin molded product formed by using the resin composition according to any one of (1) to (7).
(9) The resin molded product according to (8), in which the resin molded product is an interior or exterior part for an automobile.
(10) A method for producing a wood powder fiber reinforced polyolefin-based resin composition including: performing first stage kneading of kneading a wood powder fiber and an acid-modified polyethylene to form a mixture; and then performing second stage kneading of kneading the mixture, a polyolefin-based resin (excluding a polyethylene), and an olefin-based or styrene-based elastomer.

### [Function]

With the first stage kneading, the wood powder fiber is covered with the acid-modified polyethylene, and the wood powder fiber is embedded in contact with the acid-modified polyethylene. Therefore, in the second stage kneading, the contact of the wood powder fiber with the matrix polyolefin-based resin or the elastomer is prevented, and the above wood powder fiber reinforced polyolefin-based resin composition is obtained.

(11) The method for producing a wood powder fiber reinforced polyolefin-based resin composition according to (10), in which one continuous kneading machine is used, which is provided with a first charging unit, an upstream kneading zone, a second charging unit, and a downstream kneading zone in this order from upstream to downstream, the first stage kneading is performed in the upstream kneading zone by charging the wood powder fiber and the acid-modified polyethylene from the first charging unit, and the second stage kneading is performed in the downstream kneading zone by charging the polyolefin-based resin and the elastomer from the second charging unit.

(12) The method for producing a wood powder fiber reinforced polyolefin-based resin composition according to (10), in which one batch kneading machine is used, and the first stage kneading is performed by charging the wood powder fiber and the acid-modified polyethylene into the batch kneading machine, and then the second stage kneading is performed by charging the polyolefin-based resin and the elastomer into the batch kneading machine.

According to the present invention, since the wood powder fiber reinforced polyolefin-based resin composition can achieve both a high elastic modulus and a high impact strength, the composition can also be applied to a resin molded product such as an interior or exterior part for an automobile, which has previously been difficult to apply due to lack of impact strength. In addition, since it contains a wood powder fiber, which is lightweight and has a small environmental load, it also contributes to weight reduction and environmental load reduction required for the interior or exterior part for an automobile.

### BRIEF DESCRIPTION OF DRAWINGS

Fig. 1 is a diagram illustrating kneading and injection molding of a resin composition in Examples.
Fig. 2 is a transmission electron microscope image (50,000 times) of a resin composition in Example 1.
Fig. 3 is a transmission electron microscope image (200,000 times) of a resin composition in Comparative Example 2.

### DESCRIPTION OF EMBODIMENTS

### <1> Polyolefin-based Resin

Examples of a polyolefin-based resin (excluding a polyethylene) include, but are not limited to, a polypropylene (PP), an ethylene vinyl acetate copolymer (EVA), and polymethylpentene (TPX).

Among these, a polypropylene is particularly preferred since it is easy to satisfy both mechanical performance and a low price, and the composition has improved bending elastic modulus and impact strength, providing a bending elastic modulus/impact strength balance suitable for application in an interior or exterior part or an automobile.

The polypropylene is not particularly limited, and preferably has a melt flow rate (MFR) of 5 to 120 g/10 min at 230°C and 21.2 N measured in accordance with ISO 1133, and more preferably 10 to 100 g/10 min. This is because flowability of the resin composition becomes appropriate.

### <2> Wood Powder Fiber

Examples of a wood powder fiber include, but are not limited to, a wood powder fiber derived from various plants such as conifers (such as cedar and pine), broad-leaved trees (such as beech and zelkova), woody plants (such as bamboo and vine), and herbaceous plants (such as bagasse (residue from squeezing sugarcane), and rice).

As the wood powder fiber, for example, "TABFB" (product name) manufactured by TOYOTA AUTO BODY Co., Ltd. can be used.

A fiber length of the wood powder fiber is not particularly limited, and is preferably 50 µm or more, and more preferably 100 µm or more. This is because when the fiber length is 50 µm or more, an effect of improving the impact resistance is improved.

### <3> Acid-modified Polyethylene

An acid-modified polyethylene is not particularly limited, and a polyethylene having a molecular weight of 50,000 or more is preferred. This is because when the molecular weight is high, the impact resistance of the acid-modified polyethylene itself is high, and compatibility with the matrix polyolefin resin is low, making it easy to form an interface.

Examples of a modifying group for acid modification include, but are not limited to, maleic anhydride, acrylic acid, and glycidyl methacrylate.

An amount of modification (grafting) is not particularly limited, and may be 0.1 wt% to 10 wt%. When the amount of modification is small, reactivity with cellulose is poor, and it is not possible to embed all of a cellulose interface. On the other hand, when the amount of modification is large, the elastomer itself is brittle, and dispersibility in a polypropylene resin deteriorates, making it not possible to be present at the cellulose interface.

Properties of the acid-modified polyethylene are not particularly limited, and the acid-modified polyethylene preferably has an MFR (190°C, 21.2 N) of 5 g/10 min or less and a specific gravity of 0.93 or more. When the MFR is 5 g/10 min or less (since the molecular weight is high, for example, Mw is 100,000), the impact resistance of the acid-modified polyethylene itself is high. When the specific gravity is 0.93 or more, the elastic modulus of the acid-modified polyethylene itself is high, so that both the elastic modulus and the impact strength of the composition can be improved.

### <4> Olefin-based or Styrene-based Elastomer

Examples of an olefin-based elastomer include, but are not limited to, an ethylene-α-olefin copolymer elastomer (EOM, EBM, or EPM).

Examples of a styrene-based elastomer include, but are not limited to, an elastomer in which the hard segment is a polystyrene and the soft segment is polybutadiene, polyisoprene, or the like.

### <5> Other Additives

Other fillers such as talc or a whisker may be added to improve the rigidity.

Similarly, a resin having an elastic modulus higher than that of the polyolefin-based resin, such as a polyamide, may be added.

In addition, fillers such as calcium carbonate, kaolin clay, and mica, antioxidants, ultraviolet absorbers, light stabilizers, flame retardants, colorants, and the like may be added.

### <6> Microstructure (Morphology)

Regarding the above "the wood powder fiber is embedded in contact with the acid-modified polyethylene" or "the acid-modified polyethylene is present in contact with a periphery of the wood powder fiber", in TEM observation, the acid-modified polyethylene is preferably present in contact with 80% or more, more preferably present in contact with 90% or more, and most preferably present in contact with 95% or more of the periphery of each wood powder fiber. This is because the effect of preventing the contact of the wood powder fiber with the matrix polyolefin-based resin or the elastomer is improved.

### <7> Physical Properties of Resin Composition

As properties of the resin composition, it is preferable that the bending elastic modulus is 1700 MPa or more and a Charpy impact strength is 13 kJ/m² or more, it is more preferable that the bending elastic modulus is 1750 MPa or more and the Charpy impact strength is 14 kJ/m² or more, and it is most preferable that the bending elastic modulus is 1800 MPa or more and the Charpy impact strength is 15 kJ/m² or more.

In addition, the composition has an MFR (230°C, 21.2 N) of preferably 10 g/10 min or more, more preferably 11 g/10 min or more, and most preferably 12 g/10 min or more. This is because when the MFR is 10 g/10 min or more, the flowability is improved, which is advantageous for injection molding a resin molded product such as an interior or exterior part for an automobile.

### <8> First Stage Kneading and Second Stage Kneading

A kneading machine used in the first stage kneading and a kneading machine used in the second stage kneading may be separate (i.e., two kneading machines), but it is efficient and preferable to use one continuous kneading machine as in the above configuration (11) or one batch kneading machine as in the above configuration (12).

Examples of the continuous kneading machine include, but are not limited to, a twin-screw kneading extruder and a continuous kneader.

Examples of the batch kneading machine include, but are not limited to, an internal mixer such as a Banbury mixer, a kneader, and an internal mixer, and an open mixer such as an open roll machine.

### <9> Resin Molded Product

Examples of a resin molded product include, but are not limited to, an interior or exterior part (including an exterior panel) for an automobile, an interior or exterior part (including an exterior panel) for railway vehicles and buildings, and a housing and a part of electrical appliances. Examples of the interior or exterior part for an automobile include a bonnet hood, a fender, a bumper, a door, a trunk lid, a roof, a radiator grill, a wheel cap, an instrument panel, and a pillar garnish.

### Examples

Resin compositions in Examples 1 to 6 and Comparative Examples 1 to 4 shown in the following Table 1 were prepared by blending and kneading, resin molded products were injection molded using respective resin compositions, and the physical properties thereof were examined. Note that, Comparative Examples 2, 3, and 4 are respectively Examples 1, 6, and 11 in Patent Literature 11.

**[Table 1]**

| | | | Example 1 | Example 2 | Example 3 | Example 4 | Example 5 | Example 6 | Comparative Example 1 | Comparative Example 2 | Comparative Example 3 | Example 4 |
|---|---|---|---|---|---|---|---|---|---|---|---|---|
| | Polypropylene | FM1900 | 55 | 55 | 55 | 55 | 50 | 35 | 55 | 55 | 55 | 73 |
| | wood powder fiber | φ10 µm/L50 µm | 10 | | | | | | | | | |
| | | φ20 µm/L100 µm | | 10 | 10 | 10 | 10 | 20 | 10 | | 15 | |
| | Cellulose fiber | φ35 µm/L45 µm | | | | | | | | 15 | | 5 |
| | Acid-modified polyethylene | MFR: 0.4, p: 0.94, Vicat softening point: > 115°C | 10 | 10 | | 10 | 10 | | | | 7 | |
| | | MFR: 0.3, p: 0.94, Vicat softening point: 119°C | | | 10 | | | 15 | | | | |
| | Olefin-based elastomer | MFR: 1.0, p: 0.860 | 15 | 15 | 15 | | | 20 | 15 | | | |
| Blending (mass%) | Styrene-based elastomer | St: 20%, MFR: 13, p: 0.89 | | | | 15 | 15 | | | | | |
| | Acid-modified polypropylene | MFR: 6.5, p: 0.89, Vicat softening point: 150°C | | | | | | | 10 | | | |
| | High density polyethylene | MFR: 1.0 | | | | | | | | 17 | 10 | 17 |
| | Acid-modified styrene-based elastomer | St: 30% | | | | | | | | 13 | 13 | 5 |
| | Whisker | Magnesium sulfate inorganic fiber | 10 | 10 | 10 | 10 | | 10 | 10 | | | |
| | Talc | Average particle diameter: 5 µm | | | | | 15 | | | | | |
| | Total | | 100 | 100 | 100 | 100 | 100 | 100 | 100 | 100 | 100 | 100 |
| Physical properties | Specific gravity | | 0.99 | 0.98 | 0.98 | 1.00 | 1.03 | 1.01 | 0.99 | 0.99 | 0.98 | 0.94 |
| | Bending strength (MPa) | | 29 | 28 | 29 | 30 | 30 | 30 | 30 | 33 | 30 | 31 |
| | Bending elastic modulus (MPa) | | 1820 | 1950 | 2010 | 2100 | 2140 | 2210 | 2180 | 1750 | 1710 | 1610 |
| | Charpy impact strength at RT (kJ/m²) | | 22 | 21 | 18 | 16 | 23 | 15 | 8 | 10 | 10 | 17 |
| | Tensile yield strength (MPa) | | 19 | 18 | 19 | 19 | 20 | 20 | 24 | 21 | 19 | 21 |
| | Tensile elongation at break (%) | | 13 | 17 | 15 | 15 | 20 | 14 | 15 | 19 | 24.0 | 18.0 |
| | MFR (230°C, 21.2 N) (g/10 min) | | 18 | 15 | 14 | 19 | 14 | 13 | 11 | 9 | 8 | 12 |

### [Blending]

In Table 1, the numerical values in the blending column are in mass%. The blending and details of the components used are as follows.
- The matrix polypropylene is "YUPLENE BX3920" (product name) manufactured by SK Chemicals (MFR (230°C, 2.16 N): 100 g/10 min, yield strength: 32 MPa, bending elastic modulus: 1.8 GPa or more).
- The wood powder fiber (mainly 10 µm in fiber diameter and 50 µm in fiber length) is a wood powder having a smaller fiber diameter and shorter fiber length than TABFB-WD1 to be described later.
- The wood powder fiber (mainly 20 µm in fiber diameter and 100 µm in fiber length) is "TABFB-WD1" (product name) manufactured by TOYOTA AUTO BODY Co., Ltd.
- The cellulose fiber (35 µm in average fiber diameter and 45 µm in average fiber length) (ARBOCEL FD600-30) is a cellulose fiber "ARBOCEL FD600-30" (product name) manufactured by J. RETTENMAIER & SÖHNE GmbH + Co KG.
- The acid-modified polyethylene (MFR: 0.4, ρ: 0.94, Vicat softening point: > 115°C) is maleic anhydride-modified polyethylene "Adtex DH1203" (product name) manufactured by Japan Polyethylene Corporation.
- The acid-modified polyethylene (MFR: 0.3, ρ: 0.94, Vicat softening point: 119°C) is maleic anhydride-modified polyethylene "Modic H511" (product name) manufactured by Mitsubishi Chemical Corporation.
- The olefin-based elastomer is an ethylene-α-olefin copolymer "TAFMER DF610" (product name) manufactured by Mitsui Chemicals, Inc.
- The styrene-based elastomer is a styrene-ethylene/butylene-styrene copolymer (SEBS) "Tuftec H1052" (product name) manufactured by Asahi Kasei Corporation (styrene content: 30%).
- The acid-modified polypropylene is a maleic anhydride-modified polypropylene (mah-PP) "ADMER QE800" (product name) manufactured by Mitsui Chemicals, Inc.
- The high density polyethylene (HDPE) is "NOVATEC HY540" (product name) manufactured by Japan Polyethylene Corporation.
- The acid-modified styrene-based elastomer is a maleic anhydride-modified styrene-ethylene/butylene-styrene copolymer (mah-SEBS) "Tuftec M1913" (product name) manufactured by Asahi Kasei Corporation (styrene content: 30%).
- The whisker is a magnesium sulfate inorganic fiber "MOS-HIGE" (product name) manufactured by Ube Material Industries, Ltd.
- The talc is "Micron White #5000S" (product name) (average particle diameter: 5 µm) manufactured by HAYASHI KASEI CO., LTD.

### [Kneading (Examples)]

In Examples, first stage kneading of kneading a wood powder fiber and an acid-modified polyethylene was performed to form a mixture, and then second stage kneading of kneading the mixture, a polyolefin-based resin (excluding a polyethylene), and an olefin-based or styrene-based elastomer was performed, to obtain a wood powder fiber reinforced polyolefin-based resin composition.

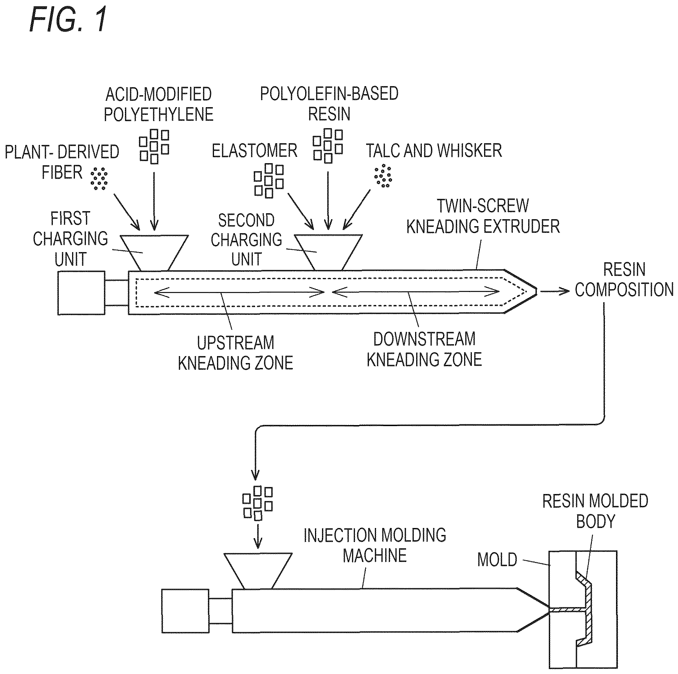

More specifically, as shown in Fig. 1, one twin-screw kneading extruder was used, which was provided with a first charging unit, an upstream kneading zone, a second charging unit, and a downstream kneading zone in this order from upstream to downstream, the first stage kneading was performed in the upstream kneading zone by charging the wood powder fiber and the acid-modified polyethylene from the first charging unit, and the second stage kneading was performed in the downstream kneading zone by charging the polyolefin-based resin, the elastomer, the talc, and the whisker from the second charging unit.

### [Kneading (Comparative Examples)]

In Comparative Examples, using the same twin-screw kneading extruder as above, all components were charged from the first charging unit and kneaded simultaneously throughout the entire kneading zone to obtain a plant-derived fiber reinforced polyolefin-based resin composition.

### [Injection Molding]

Each of the resin compositions in Examples and Comparative Examples was injected into a cavity of a mold to mold a resin molded body in accordance with ISO 527-1A. From this molded body, test pieces having predetermined dimensions corresponding to the measurements to be described later were cut out, and TEM observation and physical property measurement were performed. The measurement results are shown in Table 1.

### [TEM Observation]

Thin sections of resin molded bodies molded from the resin compositions in Examples and Comparative Examples were observed using a TEM.

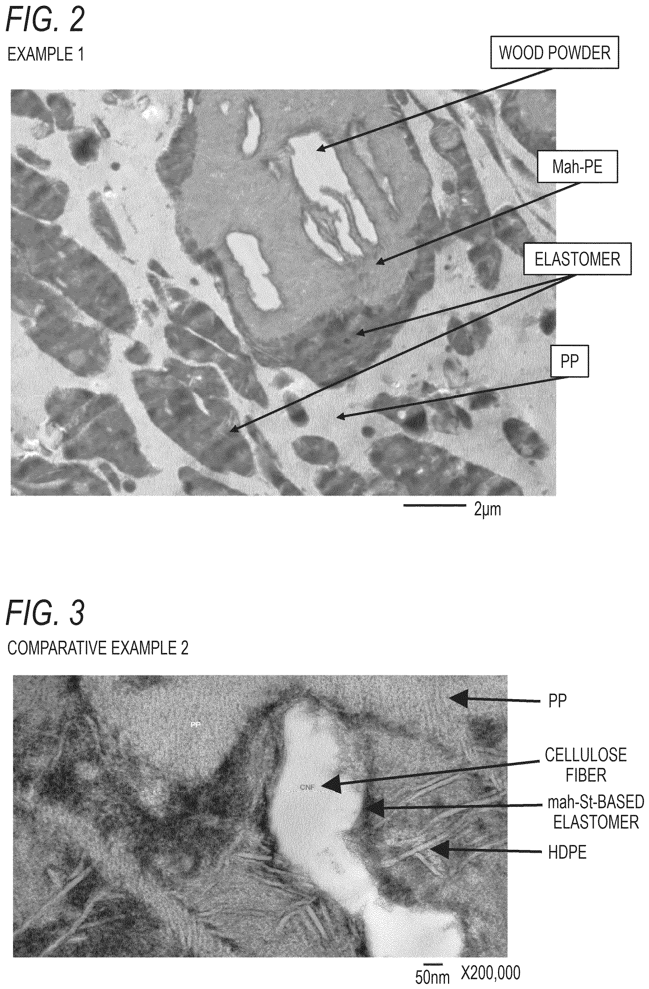

In Examples, for example, as shown in a TEM image of Example 1 shown in Fig. 2, the wood powder fiber was embedded in contact with the acid-modified polyethylene. In other words, the acid-modified polyethylene was present in contact with a periphery of the wood powder fiber (specifically, in 95% or more of the periphery). In addition, the elastomer was present in contact with a periphery of the acid-modified polyethylene or was present independently of the acid-modified polyethylene.

In Comparative Examples, for example, as shown in a TEM image of Comparative Example 2 shown in Fig. 3, the matrix polypropylene, the acid-modified styrene-based elastomer or the acid-modified polypropylene, and the high density polyethylene were present in contact with a periphery of the plant-derived fiber.

### [Physical Property Measurement]

### (1) Specific Gravity

The specific gravity was measured in accordance with ISO 1183.

### (2) Bending Strength and Bending Elastic Modulus

In accordance with ISO 178, a test piece (length: 80 mm, width: 10 mm, thickness: 4.0 mm) was subjected to a three-point bending test at room temperature (21°C to 25°C (the same applies below)) to measure the bending strength and the bending elastic modulus. In the group of Examples and Comparative Examples in which YUPLENE BX3920 is used as the matrix, a preferred bending elastic modulus is thought to be 1700 MPa or more, and a more preferred bending elastic modulus is thought to be 1800 MPa or more.

### (3) Charpy Impact Strength

In accordance with ISO 179-1, a notched test piece (length: 80 mm × width: 10 mm × thickness: 4 mm, notch depth: 2 mm, notch R: 0.25 mm) was subjected to a Charpy impact test with a 2 J hammer at room temperature to measure the Charpy impact strength (impact value). In the group of Examples and Comparative Examples in which YUPLENE BX3920 is used as the matrix, a preferred Charpy impact strength is thought to be 13 kJ/m² or more, and a more preferred Charpy impact strength is thought to be 14 kJ/m² or more.

### (4) Tensile Yield Strength and Tensile Elongation at Break

In accordance with ISO 527, a test piece (1A type) was subjected to a tensile test at room temperature at a test speed of 50 mm/min to measure the tensile yield strength and the tensile elongation at break.

### (5) MFR

The MFR was measured at 230°C and 21.2 N in accordance with ISO 1133.

As shown in Table 1, Comparative Example 1, in which the acid-modified polypropylene is used as a compatibilizer and each material is present in contact with the periphery of the fiber, has a low Charpy impact strength.

In addition, Comparative Examples 2 and 3, in which the acid-modified styrene-based elastomer is used as a compatibilizer and each material is in contact with the periphery of the fiber, have a low Charpy impact strength.

Further, Comparative Example 4, in which a small amount of acid-modified styrene-based elastomer is used as a compatibilizer and each material is in contact with the periphery of the fiber, has a low bending elastic modulus.

In contrast, Examples 1 to 6, in which the acid-modified polyethylene is used as a compatibilizer and the compatibilizer is mainly present in contact with a periphery of the wood powder fiber, have a high bending elastic modulus and a high Charpy impact strength, and also have a high MFR.

Note that, the present invention is not limited to the above embodiment, and can be embodied by making appropriate modifications without departing from the spirit of the invention.

## Claims

1. A wood powder fiber reinforced polyolefin-based resin composition comprising:
a matrix polyolefin-based resin which is not a polyethylene;
a wood powder fiber;
an acid-modified polyethylene; and
an olefin-based or styrene-based elastomer, wherein
the wood powder fiber is embedded in contact with the acid-modified polyethylene.

2. A wood powder fiber reinforced polyolefin-based resin composition comprising:
45 mass% to 65 mass% of a matrix polyolefin-based resin which is not a polyethylene;
5 mass% to 30 mass% of a wood powder fiber;
an acid-modified polyethylene in an amount of 0.25 to 4.0 times the mass% of the wood powder fiber; and
10 mass% to 30 mass% of an olefin-based or styrene-based elastomer, wherein
the acid-modified polyethylene is present in contact with a periphery of the wood powder fiber, and
the elastomer is present in contact with a periphery of the acid-modified polyethylene or is present independently of the acid-modified polyethylene.

3. The wood powder fiber reinforced polyolefin-based resin composition according to claim 2, further comprising:
2 mass% to 15 mass% of a filler which is not the wood powder fiber.

4. The wood powder fiber reinforced polyolefin-based resin composition according to claim 2, wherein the polyolefin-based resin is a polypropylene, and the acid-modified polyethylene has an MFR, at 190°C and 21.2 N, of 5 g/10 min or less and a specific gravity of 0.93 or more.

5. The wood powder fiber reinforced polyolefin-based resin composition according to claim 2, wherein the resin composition has a bending elastic modulus of 1700 MPa or more and a Charpy impact strength of 13 kJ/m² or more.

6. The wood powder fiber reinforced polyolefin-based resin composition according to claim 2, wherein the resin composition has an MFR, at 230°C and 21.2 N, of 10 g/10 min or more.

7. A wood powder fiber reinforced polyolefin-based resin composition comprising:
a wood powder fiber as a reinforcing filler in a matrix polyolefin-based resin, wherein
the wood powder fiber reinforced polyolefin-based resin composition has a bending elastic modulus of 1700 MPa or more, a Charpy impact strength of 13 kJ/m² or more, and an MFR, at 230°C and 21.2 N, of 10 g/10 min or more.

8. A resin molded product formed with the resin composition according to any one of claims 1 to 7.

9. The resin molded product according to claim 8, wherein the resin molded product is an interior or exterior part for an automobile.

10. A method for producing a wood powder fiber reinforced polyolefin-based resin composition comprising:
performing first stage kneading of kneading a wood powder fiber and an acid-modified polyethylene to form a mixture; and
performing second stage kneading of kneading the mixture, a polyolefin-based resin which is not a polyethylene, and an olefin-based or styrene-based elastomer.

11. The method for producing a wood powder fiber reinforced polyolefin-based resin composition according to claim 10, wherein
one continuous kneading machine, which is provided with a first charging unit, an upstream kneading zone, a second charging unit, and a downstream kneading zone in this order from upstream to downstream, is used
the first stage kneading is performed in the upstream kneading zone by charging the wood powder fiber and the acid-modified polyethylene from the first charging unit, and
the second stage kneading is performed in the downstream kneading zone by charging the polyolefin-based resin and the elastomer from the second charging unit.

12. The method for producing a wood powder fiber reinforced polyolefin-based resin composition according to claim 10, wherein
one batch kneading machine is used, and
the first stage kneading is performed by charging the wood powder fiber and the acid-modified polyethylene into the batch kneading machine, and the second stage kneading is performed by charging the polyolefin-based resin and the elastomer into the batch kneading machine.
